# FASCICULE DE BREVET EUROPEEN

(11) **EP 4 334 076 B1**
(45) Date de publication et mention de la délivrance du brevet: **08.04.2026**
(21) Numéro de dépôt: 22735502.1
(22) Date de dépôt: 21.04.2022
(51) Int. Cl.: B23K 35/02, B23K 1/008, B23K 35/28, B32B 15/01, C22C 1/02, C22C 21/00, C22C 21/02, C22C 21/10, C22F 1/04, F28F 9/00, B23K 101/14, B23K 103/10, B23K 1/19, B23K 1/00

(54) **BANDE OU TÔLE EN ALLIAGE D'ALUMINIUM POUR LA FABRICATION D'ECHANGEURS DE CHALEUR BRASES**
BAND ODER BLECH AUS ALUMINIUMLEGIERUNG ZUR HERSTELLUNG VON GELÖTETEN WÄRMETAUSCHERN
ALUMINUM ALLOY STRIP OR SHEET FOR THE MANUFACTURE OF BRAZED HEAT EXCHANGERS

(30) Priorité: 03.05.2021 FR 2104619
(43) Date de publication de la demande: 13.03.2024
(73) Titulaire: Constellium Neuf-Brisach, 68600 Biesheim (FR)
(72) Inventeur: PEGUET, Lionel, 38950 QUAIX EN CHARTREUSE (FR); DANIELOU, Armelle, 73360 LES ECHELLES (FR)
(74) Mandataire: Constellium - Propriété Industrielle
(86) Numéro de dépôt international: PCT/FR2022/050750
(87) Numéro de publication internationale: WO 2022/234207

(56) Documents cités:
- EP-A1- 2 248 924
- EP-A1- 2 949 770
- WO-A1-2014/017976
- WO-A1-2019/225512
- JP-A- 2019 108 597
- US-A1- 2011 236 717
- US-A1- 2018 043 476
- US-A1- 2021 207 901

## Description

### DOMAINE TECHNIQUE

L'invention concerne les bandes ou tôles minces (d'épaisseur généralement comprise de 0,05 à 3 mm, de préférence de 0,15 à 2,5 mm) en alliage d'âme aluminium-manganèse (série 3xxx selon la nomenclature de l'Aluminum Association), éventuellement plaqué sur une ou deux faces d'un alliage de couverture, le plus souvent un alliage de brasage aluminium-silicium (série 4xxx selon la nomenclature de l'Aluminum Association) et/ou d'un alliage intercalaire, placé entre l'âme et l'éventuel alliage de brasage, en alliage aluminium-manganèse (série 3xxx selon la nomenclature de l'Aluminum Association). Ces bandes ou tôles sont notamment destinées à la fabrication d'éléments, tels que des tubes, collecteurs et plaques, d'échangeurs de chaleur assemblés par brasage, notamment pour l'automobile, tels que les radiateurs de refroidissement du moteur, les évaporateurs, les radiateurs de chauffage et les refroidisseurs d'air de suralimentation, les collecteurs, les refroidisseurs de batterie des véhicules électriques, ainsi que dans les systèmes de climatisation. Ces échangeurs se trouvent notamment dans les systèmes de refroidissement des moteurs et de climatisation des habitacles d'automobiles. Les techniques de brasage des alliages d'aluminium sont décrites par exemple dans l'article de J.C. Kucza, A. Uhry et J.C. Goussain " Le brasage fort de l'aluminium et ses alliages ", paru dans Soudage et Techniques Connexes, nov.-déc. 1991, pp. 18-29. Les bandes ou tôles selon l'invention peuvent notamment être utilisées dans les techniques de brasage avec flux non corrosif du type NOCOLOK^{®} ou CAB (controlled atmosphere brazing).

### ART ANTERIEUR

Les propriétés requises pour les bandes ou tôles en alliage d'aluminium utilisées pour la fabrication d'échangeurs brasés sont notamment une formabilité suffisante pour une mise en forme aisée des tubes, ailettes collecteurs et plaques, avant brasage, une bonne aptitude au brasage, une résistance mécanique élevée après brasage, de manière à utiliser des épaisseurs aussi faibles que possible, une bonne résistance à la sollicitation en fatigue en service, et une bonne résistance à la corrosion après brasage. Bien entendu, il importe que l'alliage choisi soit aisé à couler et à laminer, et que le coût de fabrication des bandes ou tôles soit compatible avec les exigences de l'industrie automobile.

Afin de favoriser la réduction d'épaisseur des tubes pour les échangeurs de chaleur (comme les radiateurs), il est en particulier intéressant d'augmenter les propriétés mécaniques du matériau après brasage (en particulier la charge maximale (Rm) de la courbe de traction obtenue selon la norme ISO 6892-1 (« *Ultimate Tensile Strength* » ou « *UTS* » en anglais), qui est un facteur clé de résistance à la fatigue), sans réduire la résistance à la corrosion ni la brasabilité.

Des solutions ont déjà été proposées dans ce sens. On peut citer à titre d'exemple les demandes de brevet suivantes, divulguant les compositions ci-après :
- WO2020/178507 : 0,1 - 0,3 % Si ; < 0,2 % Fe ; 0,75 - 1,05 % Cu ; 1,2 - 1,7 % Mn ; < 0,03 % Mg ; < 0,15 % Ti ; < 0,1 % Zn ;
- EP1183151 : 0,4 - 0,8 % Si ; < 0,4 % Fe ; 0,5 - 2 % Cu ; 0,5 - 1,5 % Mn ;
- EP2017032: 0,3 - 1,2 % Si ; 0,05 - 0,4 % Fe ; 0,3 - 1,2 % Cu ; 0,3 - 1,8 % Mn ; 0,05 - 0,6 % Mg ; < 0,3 % Ti ; < 0,3 % Zr ; < 0,3 % Cr.
- US2018/043476 : 0,5 - 1,8 % Mn ; 0,05 - 1,3 % Si ; 0,05 - 0,5 % Fe ; 0,05 - 0,5 % Mg ; 0,05 - 0,3 % Zr ; 0,05 - 0,3 % Ti et 0,05 - 0,3 % Cr.

Mais les solutions proposées ne permettent pas forcément de résoudre le bon compromis entre une bonne résistance mécanique après brasage, une bonne résistance à la corrosion et une bonne brasabilité.

Face à une demande du marché croissante, il demeure un besoin d'un nouvel alliage d'âme ayant une résistance mécanique améliorée par rapport aux alliages existants, sans dégradation de la résistance à la corrosion ou de la brasabilité. Un tel alliage d'âme pourrait permettre de répondre à la demande toujours présente de réduction d'épaisseur des produits.

### EXPOSE DE L'INVENTION

De manière surprenante, la demanderesse a déterminé un domaine de composition permettant d'améliorer la résistance mécanique sans dégradation de la résistance à la corrosion ou de la brasabilité.

A titre d'exemple, la cible selon la présente invention peut être d'atteindre une résistance en traction Rm supérieure à 140 MPa, de préférence supérieure à 145 MPa, de préférence supérieure à 150 MPa, de préférence supérieure à 160 MPa pour les bandes ou tôles industrielles après brasage.

Comme démontré dans les exemples, la présente invention présente en outre l'avantage inattendu d'améliorer la résistance à la corrosion, par exemple la corrosion en test SWAAT. L'invention a ainsi pour objet une bande ou tôle, destinée à la fabrication d'échangeurs thermiques brasés, ayant une couche d'âme, éventuellement une couche de couverture sur une ou deux faces de la couche d'âme et éventuellement une couche intercalaire sur une ou deux faces de la couche d'âme placée entre la couche d'âme et l'éventuelle couche de couverture, la couche d'âme étant en alliage d'aluminium de composition (% en masse) selon la revendication 1.

L'invention a également pour objet un procédé de fabrication d'une bande ou tôle selon la revendication 8.

L'invention a également pour objet un échangeur de chaleur selon la revendication 9.

L'invention a également pour objet l'utilisation d'une bande ou tôle selon la revendication 10.

### FIGURES

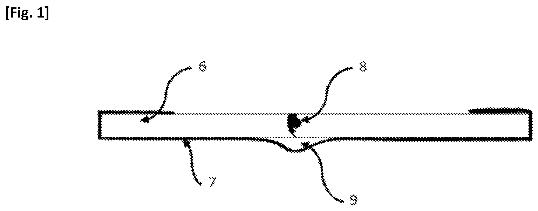

[Fig. 1] La Figure 1 est un schéma décrivant l'analyse de perforation lors du test de résistance à la corrosion SWAAT des exemples.

### DESCRIPTION DETAILLEE DE L'INVENTION

Dans la description et les revendications, sauf indication contraire :
- la désignation des alliages d'aluminium est conforme à la nomenclature de The Aluminum Association ;
- les teneurs en éléments chimiques sont désignées en pourcentages massiques.

### Alliage d'aluminium d'âme

La bande ou tôle selon la présente invention, est destinée à la fabrication d'échangeurs thermiques brasés, et a une couche d'âme, éventuellement une couche de couverture sur une ou deux faces de la couche d'âme et éventuellement une couche intercalaire sur une ou deux faces de la couche d'âme placée entre la couche d'âme et l'éventuelle couche de couverture, la couche d'âme étant en alliage d'aluminium de composition (% en masse) :
- Si : plus de 0,25 %, de préférence plus de 0,30 %, de préférence plus de 0,35 %, de préférence plus de 0,40 % ; et moins de 0,60 %, de préférence moins de 0,55 % ;
- Fe : moins de 0,25 %, de préférence moins de 0,20 % ; et au moins 0,08 %, de préférence plus de 0,10 % ;
- Cu : plus de 0,60 %, de préférence plus de 0,70 %, de préférence plus de 0,80 %, de préférence plus de 0,85 % ; et moins de 1,10 %, de préférence moins de 1,00 %, de préférence inférieure à 0,95 % ;
- Mn : plus de 1,40 %, de préférence plus de 1,50 % ; et moins de 2,00 %, de préférence moins 1,80 %, de préférence moins de 1,65 % ;
- Ti : moins de 0,10 % ; et plus de 0,05 % ;
- Mg : moins de 0,05 %, de préférence moins de 0,02 %, de préférence moins de 0,01 %, de préférence moins de 0,001 % ;
- Zr : moins de 0,01 %, de préférence moins de 0,005 % ;
- Cr : moins de 0,01 %, de préférence moins de 0,005 % ;
- Zn : moins de 0,20 %, de préférence moins de 0,10 %, de préférence moins de 0,05 %, de préférence moins de 0,01 % ;
- impuretés : moins de 0,05 % chacune et moins de 0,15 % au total ;
- reste aluminium.

Les limites de composition de l'alliage d'âme peuvent se justifier de la manière suivante.

Une teneur minimale en silicium de 0,10 % permet d'éviter d'utiliser une base pure, dont le coût est élevé. Il a été observé que des teneurs en Si supérieures à 0,25 % permettent d'améliorer la résistance à la corrosion, par exemple en test SWAAT. La teneur en silicium est donc de préférence supérieure à 0,25 %, de préférence supérieure à 0,30 %, de préférence supérieure à 0,35 %, de préférence supérieure à 0,40 %.

Une teneur en silicium trop élevée peut réduire la température de solidus de l'âme et compromettre le brasage. Il est préférable de limiter le silicium à moins de 0,60%, de préférence moins de 0,55%.

Une teneur en fer limitée à moins de 0,25 %, de préférence moins de 0,20 %, est également favorable à la résistance à la corrosion et à la formabilité, notamment en réduisant la fraction de précipités grossiers contenant du fer. Cependant, il n'est pas nécessaire de descendre à des teneurs très faibles, par exemple inférieures à 0,08 %, qui conduiraient à des prix de revient élevés. Par conséquent, la teneur en fer est supérieure ou égale à 0,08 %, de préférence de plus de 0,10 %.

Le cuivre est un élément durcissant qui contribue à la résistance mécanique, mais au-delà de 1,1 %, le risque de former des criques à la coulée est plus élevé. Il peut aussi se former des composés intermétalliques grossiers à la coulée qui nuisent à l'homogénéité du métal et peuvent constituer des sites d'initiation de la corrosion. Pour obtenir une résistance mécanique élevée, la teneur en cuivre est supérieure à 0,60 %, de préférence supérieure à 0,70 %, de préférence supérieure à 0,80 %, de préférence supérieure à 0,85 %. De préférence, la teneur en cuivre est inférieure à 1,10 %, de préférence inférieure à 1,00 %, de préférence inférieure à 0,95%.

Le manganèse contribue à la résistance mécanique par solution solide et par formation de dispersoïdes Al-Mn-Si. Pour obtenir un durcissement significatif, la teneur en manganèse est de préférence supérieure à 1,40 %, de préférence supérieure à 1,50 %. Pour éviter de former un nombre important de phases grossières à la coulée, qui peuvent réduire la formabilité, il est recommandé de limiter la teneur en Mn à moins de 2,00 %, de préférence moins de 1,80 %, de préférence moins de 1,65 %.

Une addition limitée de zinc peut avoir un effet bénéfique sur la résistance à la corrosion, en modifiant les mécanismes électrochimiques, notamment pour les alliages les plus chargés en cuivre. Elle doit cependant rester en dessous de 0,20 % pour éviter une trop forte susceptibilité à la corrosion généralisée de l'âme. De préférence, la teneur en Zn est limitée à moins de 0,10 %, de préférence moins de 0,05 %, de préférence moins de 0,01 %.

Le magnésium apporte un gain significatif de résistance mécanique. Dans le cas d'un brasage en four sous atmosphère contrôlée (CAB) avec flux, il est cependant préféré de limiter sa teneur à moins de 0,2 %. Selon la présente invention, la teneur en magnésium est de moins de 0,05%, de préférence de moins de 0,02 %, de préférence de moins de 0,01 %, de préférence de moins de 0,001 %.

Le titane permet de contrôler la taille des grains à la coulée. Sa teneur est inférieure à 0,10 %. La teneur en Ti est supérieure à 0,05 %.

Le zirconium et le chrome peuvent être ajoutés optionnellement. Cependant, ils sont de préférence absents, ou alors présents à une teneur correspondant aux impuretés c'est-à-dire inférieure à 0,01 %, de préférence inférieure à 0,005 % chacun.

### Alliage d'aluminium de couverture

Les bandes ou tôles selon la présente invention ont une épaisseur généralement comprise de 0,05 à 3 mm, de préférence de 0,15 à 2,5 mm, en fonction du type de pièce fabriquée, et peuvent être plaquées, sur une ou deux faces de la couche d'âme et/ou sur une face libre de l'éventuelle couche intercalaire, avec un alliage de couverture, qui peut être soit un alliage de brasage, soit un alliage jouant un rôle d'anode sacrificielle pour protéger la pièce de la corrosion, tel qu'un alliage contenant du zinc, par exemple de la série 7xxx, de préférence comprenant de 0,70 à moins de 2,50 %, de préférence de 0,70 à moins de 1,30 %, de préférence de 0,70 à moins de 1,00 % de Zn, ou par exemple de la série 3xxx, de préférence comprenant de 0,50 à 1,60 %, de préférence de 0,90 à 1,20 % de Zn. L'alliage de la série 7xxx peut par exemple être l'alliage AA7072. La face libre de l'éventuelle couche intercalaire correspond à la face de la couche intercalaire qui n'est pas en contact avec la couche d'âme. Il est à noter qu'une couche de brasage peut être plaquée sur une ou deux faces d'une couche d'âme et/ou sur la face libre d'une couche intercalaire, alors que l'anode sacrificielle peut être plaquée de préférence seulement sur une ou deux faces d'une couche d'âme, sans couche intercalaire entre la couche d'âme et l'anode sacrificielle.

Selon une variante, un alliage de couverture de type anode sacrificielle pourrait être selon la présente invention un alliage de la série 7xxx, ayant de préférence la composition suivante, en pourcentages massiques : moins de 0,50 % de Si ; moins de 0,50 % de Fe ; moins de 0,25 % de Cu ; moins de 0,30 % de Mn ; moins de 0,20 %, de préférence moins de 0,15 % de Mg ; de 0,70 à 5,00 %, de préférence de 0,70 à moins de 2,50 %, de préférence de 0,70 à moins de 1,30 %, de préférence de 0,70 à moins de 1,00 % de Zn ; moins de 0,15 % de Ti ; autres éléments moins de 0,05 % chacun et moins de 0,15 % au total ; reste aluminium.

A titre d'exemple, la composition AA7072 est un alliage d'aluminium qui peut convenir comme anode sacrificielle selon la présente invention. Sa composition est, en pourcentages massiques : moins de 0,05 % de Si ; moins de 0,05 % de Fe ; moins de 0,10 % de Cu ; moins de 0,10 % de Mn ; moins de 0,10 % de Mg ; de 0,80 à 1,30 % de Zn ; autres éléments inférieurs à 0,05 % chacun et inférieurs à 0,15 % au total ; le reste étant de l'aluminium.

Selon une variante, la composition AA7072 comprend de préférence moins de 1,00 % de Zn.

Selon une autre variante, un alliage de couverture de type anode sacrificielle pourrait être selon la présente invention un alliage de la série 3xxx, ayant de préférence la composition suivante, en pourcentages massiques : de 0,10 à 0,35 % de Si ; moins de 0,70 % de Fe ; moins de 0,20 % de Cu ; de 0,70 à 2,00 %, de préférence de 0,90 à 1,30 % de Mn ; de 0,50 à 1,60 %, de préférence de 0,90 à 1,20 % de Zn ; moins de 0,15 % de Ti ; autres éléments moins de 0,05 % chacun et moins de 0,15 % total ; reste aluminium.

Des valeurs préférentielles de chacun des éléments des alliages de la série 3xxx ou de la série 7xxx, qui pourraient convenir comme anode sacrificielle selon la présente invention, sont données à titre d'exemple dans le Tableau 1 ci-après (colonnes 3xxx-1, 7xxx-1 et 7xxx-2), en pourcentages massiques.

**[Tableau 1]**

| | **3xxx-1** | **7xxx-1** | **7xxx-2** |
|---|---|---|---|
| **Si** | 0,10 - 0,35 % | 0,05 - 0,30 % | 0,15-0,40 % |
| **Fe** | < 0,70 % | 0,25 - 0,45 % | < 0,40 % |
| **Cu** | < 0,20 % | < 0,15 % | < 0,15 % |
| **Mn** | 0,7 - 1,30 % | < 0,15 % | < 0,10 % |
| **Mg** | < 0,05 % | < 0,05 % | < 0,10 % |
| **Cr** | < 0,05 % | < 0,05 % | < 0,05 % |
| **Ni** | < 0,05 % | < 0,05 % | < 0,05 % |
| **Zn** | 0,9 - 1,55 % | 0,80 - 1,30 % | 3,50 - 4,50 % |
| | | Préf. 0,80 à < 1 % | |
| **Ti** | < 0,10 | < 0,10 % | < 0,10 % |
| | Préf. < 0,05 % | Préf. < 0,05 % | Préf. < 0,05 % |
| **Zr** | < 0,05 % | < 0,05 % | < 0,05 % |

L'alliage de brasage est de préférence un alliage de la série 4xxx, de préférence comprenant moins de 0,20 %, de préférence moins de 0,10 %, de préférence moins de 0,05 %, de préférence moins de 0,02 % de Zn, avec une température de liquidus suffisamment basse par rapport au solidus de l'alliage d'âme pour disposer d'un intervalle de température suffisant pour le brasage, une résistance mécanique acceptable et une bonne mouillabilité. Ces alliages peuvent contenir des éléments d'addition, par exemple du strontium, de préférence selon une fraction massique inférieure à 0,05 %.

Selon une variante, l'alliage de brasage de la présente invention comprend Y, Sn et/ou Bi. Cette variante présente en particulier un avantage pour le brasage sans flux. De préférence, l'alliage de brasage comprend :
- de 0,01 à 0,10 %, de préférence de 0,015 à 0,08 %, de préférence de 0,02 à 0,065 % de Y ;
- de 0,01 à 0,10 %, de préférence de 0,015 à 0,08 %, de préférence de 0,02 à 0,065 % de Sn ; et/ou
- au plus 0,04 %, de préférence au plus 0,03 %, de préférence au plus 0,02 % de Bi selon une première variante ; ou au plus 0,15 %, de préférence au plus 0,12 %, et de préférence au moins 0,05 % de Bi selon une deuxième variante.

De préférence, la bande ou tôle selon la présente invention est plaquée sur une ou deux faces de la couche d'âme et/ou sur une face libre d'une éventuelle couche intercalaire avec un alliage d'aluminium de brasage, de préférence un alliage de la série 4xxx comprenant de 4,00 à 13,00 % en masse de Si, moins de 1,00 % en masse de Fe, et de préférence moins de 0,20 %, de préférence moins de 0,10 %, de préférence moins de 0,05 %, de préférence moins de 0,02 % de Zn.

De préférence, l'alliage d'aluminium de brasage de la série 4xxx comprend (% en masse) :
- Si : de 5,00 à 13,00 %, de préférence de 6,00 à 11,00 %, de préférence de 7,50 à 10,50 % ;
- Fe : moins de 0,60 %, de préférence moins de 0,50 %, de préférence moins de 0,30 % ;
- Cu : moins de 0,40 %, de préférence moins de 0,10 %, de préférence moins de 0,05 % ;
- Mn : moins de 0,20 %, de préférence moins de 0,10 %, de préférence moins de 0,05 % ;
- Mg : selon une première variante moins de 0,20 %, de préférence moins de 0,10 %, de préférence moins de 0,05 % ; ou selon une deuxième variante de 0,50 à 2,50 %, de préférence de 1,00 à 2,00 % ;
- Zn : moins de 0,20 %, de préférence moins de 0,10 %, de préférence moins de 0,05 %, de préférence moins de 0,02 % ;
- Ti : moins de 0,30 %, de préférence moins de 0,10 %, de préférence moins de 0,05 %;
- éventuellement Bi, Y, Sr et/ou Sn ;
- autres éléments : inférieurs à 0,05 % chacun et inférieurs à 0,15 % au total ;
- reste aluminium.

A titre d'exemple, la composition AA4045 est un alliage d'aluminium qui peut convenir comme alliage de brasage selon la présente invention. Sa composition est, en pourcentage massique : de 9,0 à 11,0 % de Si, moins de 0,80 % de Fe, moins de 0,30 % de Cu, moins de 0,05 % de Mn, moins de 0,05 % de Mg, moins de 0,10 % de Zn, moins de 0,20 % de Ti, autres éléments inférieurs à 0,05 % chacun et inférieurs à 0,15 % au total, le reste étant de l'aluminium.

A titre d'exemple, la composition précédente comprend de préférence moins de 0,60 % de Fe. A titre d'exemple, la composition précédente comprend de préférence moins de 0,10 % de Cu. A titre d'exemple, la composition AA4343 est un alliage d'aluminium qui peut convenir comme alliage de brasage selon la présente invention. Sa composition est, en pourcentage massique : de 6,80 à 8,20 % de Si, moins de 0,80 % de Fe, moins de 0,25 % de Cu, moins de 0,10 % de Mn, moins de 0,05 % de Mg, autres éléments inférieurs à 0,05 % chacun et inférieurs à 0,15 % au total, le reste étant de l'aluminium.

A titre d'exemple, la composition précédente comprend de préférence moins de 0,30 % de Fe. A titre d'exemple, la composition précédente comprend de préférence moins de 0,10 % de Cu. A titre d'exemple, la composition AA4004 est un alliage d'aluminium qui peut convenir comme alliage de brasage selon la présente invention. Sa composition est, en pourcentage massique : de 9,00 à 10,50 % de Si, moins de 0,80 % de Fe, moins de 0,25 % de Cu, moins de 0,10 % de Mn, de 1,00 à 2,00 % de Mg, moins de 0,20 % de Zn, autres éléments inférieurs à 0,05 % chacun et inférieurs à 0,15 % au total, le reste étant de l'aluminium.

A titre d'exemple, la composition AA4104 est un alliage d'aluminium qui peut convenir comme alliage de brasage selon la présente invention. Sa composition est, en pourcentage massique : de 9,00 à 10,50 % de Si, moins de 0,80 % de Fe, moins de 0,25 % de Cu, moins de 0,10 % de Mn, de 1,00 à 2,00 % de Mg, moins de 0,20 % de Zn, de 0,02 à 0,20 % Bi, autres éléments inférieurs à 0,05 % chacun et inférieurs à 0,15 % au total, le reste étant de l'aluminium.

### Alliage d'aluminium intercalaire

Selon un mode de réalisation, la bande ou tôle selon la présente invention est plaquée, sur une ou deux faces de la couche d'âme, avec un alliage d'aluminium dit intercalaire, de préférence de la série 1xxx ou 3xxx, placé entre l'âme et l'éventuel alliage de brasage, de préférence comprenant (en % massique) :
- Si : moins de 0,50 %, plus préférentiellement moins de 0,20 % ;
- Fe : moins de 0,70 %, plus préférentiellement moins de 0,30 %, encore plus préférentiellement moins de 0,20 % ;
- Mn : de 0,30 à 1,40 %, plus préférentiellement de 0,50 à 0,90 %, plus préférentiellement de 0,60 à 0,80 %, ou selon une variante de 1,00 à 1,30 % ;
- Cu : moins de 0,30 %, de préférence moins de 0,10 %, encore plus préférentiellement moins de 0,05 % ;
- éventuellement Mg, Zn et/ou In ;
- autres éléments < 0,05 % chacun et < 0,15 % au total ;
- reste aluminium.

De préférence, l'alliage d'aluminium intercalaire de la bande ou tôle selon la présente invention comprend (% en masse) : Si < 0,15 % ; Fe < 0,20 % ; Cu < 0,10 % ; Mn de 0,60 à 0,80 % ; Mg < 0,02 % selon une première variante ou Mg < 0,50 %, de préférence < 0,25 % selon une deuxième variante ; autres éléments < 0,05 % chacun et < 0,15 % au total, reste aluminium.

De préférence, l'alliage d'aluminium intercalaire est un alliage de la série AA3xxx.

Selon une variante, l'alliage d'aluminium intercalaire peut comprendre en outre :
- Zn selon une teneur de 1,5 à 2,3 % ; et/ou
- In selon une teneur de 0,005 à 0,04 %.

### Bande ou tôle

La bande ou tôle selon la présente invention est une bande ou tôle dite de brasage, qui peut servir à la fabrication de différentes parties d'un échangeur thermique, par exemple des tubes, des plaques, des collecteurs, des systèmes de refroidissement de batterie pour véhicules électriques, etc.

La bande ou tôle selon la présente invention peut présenter une configuration avec plusieurs couches, et en particulier à 2, 3, 4 ou 5 couches.

La configuration avec deux couches comprend une âme plaquée sur une seule face avec une couche de couverture, en particulier soit avec une couche de brasage, soit avec une anode sacrificielle.

La configuration avec trois couches comprend :
- soit une couche d'âme plaquée sur ses deux faces avec une couche de brasage ;
- soit une couche d'âme plaquée sur ses deux faces avec une anode sacrificielle ;
- soit une couche d'âme plaquée sur une seule face avec une couche intercalaire, elle-même plaquée avec une couche de brasage ;
- soit une couche d'âme plaquée sur une première face avec une couche de brasage et sur l'autre face avec une anode sacrificielle.

La configuration avec quatre couches comprend :
- soit une couche d'âme plaquée sur une première face avec une couche intercalaire, elle-même plaquée avec une couche de brasage, et sur l'autre face avec une couche de brasage ;
- soit une couche d'âme plaquée sur une première face avec une couche intercalaire, elle-même plaquée avec une couche de brasage, et sur l'autre face avec une anode sacrificielle.

La configuration avec cinq couches comprend une couche d'âme plaquée sur ses deux faces avec une couche intercalaire elle-même plaquée avec une couche de brasage.

Dans chacune des configurations citées ci-avant, quand deux couches de brasage, deux couches intercalaires ou deux anodes sacrificielles sont prévues, alors elles peuvent être identiques ou différentes en termes de composition et d'épaisseur. En particulier, l'épaisseur de chacune des couches autres que la couche d'âme, c'est-à-dire de la couche de brasage, de la couche intermédiaire et de l'anode sacrificielle, est de préférence de 4 à 15 %, de préférence de 4 à 11 % de l'épaisseur totale de la bande ou tôle selon la présente invention. De préférence, la composition des anodes sacrificielles est identique.

### Procédé

L'invention a également pour objet un procédé de fabrication d'une bande ou tôle, comprenant les étapes successives de :
- coulée d'une plaque en alliage d'âme ;
- optionnellement homogénéisation de la plaque de 550 à 630°C, de préférence de 580 à 630°C pendant 1 à 24 heures ;
- placage éventuel avec un alliage d'aluminium de couverture sur une ou deux faces de la couche d'âme et éventuellement un alliage d'aluminium intercalaire sur une ou deux faces de la couche d'âme ;
- préchauffage à une température de 450 à 550°C, de préférence avec un maintien à la température maximale pendant moins de 30 heures, de préférence pendant moins de 20 heures, de préférence pendant moins de 12 heures, plus préférentiellement pendant moins de 3 heures ;
- laminage à chaud de la plaque éventuellement homogénéisée et éventuellement plaquée à une température de 420 à 530°C jusqu'à une épaisseur de 2 à 6 mm ;
- laminage à froid à l'épaisseur désirée, l'épaisseur de la bande ou tôle après laminage à froid étant de préférence de 0,15 à 3 mm et
- recuit à une température de 240 à 450°C, de préférence de 240 à 400°C, de préférence de 280 à 370°C, avec un maintien à la température maximale pendant 10 minutes à 15 heures, de préférence pendant 20 minutes à 3 heures.

Ledit alliage de couverture des procédés selon la présente invention peut en particulier être un alliage de brasage, ou une anode sacrificielle, ou deux alliages de brasage, ou deux anodes sacrificielles, ou un alliage de brasage et une anode sacrificielle.

De préférence, il n'y a pas de recuit intermédiaire dans les procédés selon la présente invention. Lorsqu'elle est destinée à des pièces avec une mise en forme importante, la bande ou tôle peut être utilisée à l'état recuit (état O) en procédant à un recuit final à une température de 300 à 450°C, en four continu ou en four batch. Dans un four batch, le recuit est de préférence à une température de 325 à 400°C, de préférence de 330 à 400°C. Ce recuit améliore la formabilité.

Dans les autres cas, elle peut être utilisée à l'état écroui ou restauré, qui conduit à une meilleure résistance mécanique, par exemple un état H14 ou H24 (selon la norme NF EN 515), ce dernier état étant obtenu par un recuit de restauration à une température de 250 à 325°C, de préférence inférieure à 310°C.

Avant d'installer les éventuels matériaux de placage, on peut procéder à une homogénéisation de la plaque d'alliage d'âme à une température comprise de 550 à 630°C, de préférence de 580 à 630°C. Cette homogénéisation est favorable à la ductilité de la bande ou tôle laminée et elle est recommandée lorsque la bande ou tôle est utilisée à l'état O. Elle favorise la coalescence des dispersoïdes au Mn.

### Utilisation

L'invention a également pour objet un échangeur de chaleur réalisé au moins en partie à partir d'une bande ou tôle selon la présente invention.

L'invention a également pour objet l'utilisation d'une bande ou tôle selon la présente invention, pour la fabrication d'un échangeur de chaleur, ladite bande ou tôle présentant une résistance mécanique améliorée sans dégradation de la résistance à la corrosion ou de la brasabilité.

Les bandes ou tôles selon la présente invention peuvent être utilisées dans la fabrication des échangeurs de chaleur brasés, notamment d'automobiles, tels que les radiateurs de refroidissement du moteur, les évaporateurs, les radiateurs de chauffage et les refroidisseurs d'air de suralimentation, les collecteurs, les refroidisseurs de batterie des véhicules électriques, ainsi que dans les systèmes de climatisation.

### EXEMPLES

### Exemple 1

Différents lingots d'âme ont été coulés en coulée semi-continue verticale (DC casting) avec des alliages d'aluminium ayant les compositions données dans le Tableau 2 ci-après, en pourcentages massiques :

**[Tableau 2]**

| **Alliages** | **Si** | **Fe** | **Cu** | **Mn** | **Ti** | **T solidus (°C)** |
|---|---|---|---|---|---|---|
| Référence | 0,18 | 0,16 | 0,64 | 1,34 | 0,08 | 638 |
| Ame-Comparatif-1 | 0,19 | 0,18 | 0,95 | 1,38 | 0,08 | 632 |
| Ame-Comparatif-2 | 0,19 | 0,18 | 0,97 | 1,67 | 0,08 | 632 |
| Ame-Innov-1 | 0,49 | 0,17 | 0,66 | 1,58 | 0,09 | 636 |
| Ame-Innov-2 | 0,49 | 0,17 | 0,94 | 1,57 | 0,10 | 631 |

Les lingots d'âme ont ensuite été assemblés, sur une seule face, avec un placage de brasage en alliage de type AA4045 (9,71 % de Si ; 0,2 % de Fe ; < 0,05 % de Cu ; < 0,05 % de Mg ; < 0,05 % de Mn ; < 0,05 % de Sr ; 0,02 % de Ti) qui représentait 7,5 % de l'épaisseur totale de l'assemblage. L'assemblage a été préchauffé pendant 12 heures à 500°C, laminé à chaud à une température d'environ 490°C, puis laminé à froid de 4 mm à 0,4 mm. Un recuit final pendant 1 heure à 320°C a permis d'obtenir un état métallurgique H24.

Des simulations de brasage ont ensuite été réalisées sur des échantillons de 21 cm x 30 cm pour reproduire les conditions d'un brasage sous atmosphère contrôlée (CAB) ayant moins de 50 ppm d'O₂, avec un chauffage à 600°C pendant 2 minutes.

Des mesures de résistance en traction à différentes températures (20°C, 110°C et 130°C) et de résistance à la corrosion selon le test SWAAT sur la face plaquée ont été réalisées sur les échantillons brasés.

Les mesures de résistance en traction ont été réalisées selon la norme ISO 6892-1.

La tenue en corrosion a été déterminée en utilisant le protocole suivant :
- préparer pour chaque configuration un échantillon de dimensions 126 mm (sens L) x 90 mm (sens TL), préalablement dégraissé avec un papier absorbant blanc imbibé d'acétone ;
- protéger la face non-testée ainsi que les quatre bords sur une largeur d'environ 0,5 cm avec un adhésif vinyle transparent (par exemple de type 3M vinyl 764) ;
- nettoyer la face à tester avec un papier absorbant imbibé d'acétone ;
- placer les échantillons ainsi préparés sur un rack avec une inclinaison d'environ 60° par rapport à l'horizontale ;
- réaliser pour chaque échantillon un test cyclique SWAAT (Sea Water Acidified Acetic Test) selon la norme ASTM G85 A3, comprenant notamment une alternance de phases de brouillard salin de 30 min et de phases humides de 1h30 à une température de 49°C.

Le nombre de percements a été relevé chaque jour pour chaque échantillon pendant toute la durée du test, soit 13 jours. Les percements étaient visibles au dos de chaque échantillon car ils formaient des cloques dans l'adhésif appliqué sur la face non testée, comme illustré sur la Figure 1. Dans la Figure 1, la référence 6 correspond à l'échantillon ; la référence 7 correspond à l'adhésif ; la référence 8 correspond à une perforation ; la référence 9 correspond à une cloque formée par une perforation.

Les résultats du suivi du nombre de percements sont donnés dans le Tableau 3 ci-après.

**[Tableau 3]**

| **Alliages** | **Rm après brasage 400 µm (MPa)** | | | **Nombre de percements après test SWAAT** |
|---|---|---|---|---|
| | **20°C** | **110°C** | **130°C** | **13 jours** |
| Référence | 150 | 150 | 150 | 14 |
| Ame-Comparatif-1 | 160 | 174 | 166 | 100 |
| Ame-Comparatif-2 | 169 | 178 | 156 | 74 |
| Ame-Innov-1 | 166 | 179 | 171 | 9 |
| Ame-Innov-2 | 161 | 167 | 168 | 7 |

En complément des informations données dans le Tableau 3 ci-avant, la morphologie de la corrosion a été déterminée pour chaque alliage, en fonction des observations microscopiques après le test SWAAT :
- Comparatif-1 : piqures profondes ;
- Comparatif-2 : piqures profondes ;
- Innov1 : meilleur que la référence, car la profondeur de corrosion était inférieure à celle de la référence ;
- Innov2 : meilleur que la référence, car la profondeur de corrosion était inférieure à celle de la référence.

D'après le Tableau 3 ci-avant, il est possible de tirer les conclusions suivantes :
- la présente invention permet d'obtenir de meilleures résistances mécaniques que l'alliage de référence ;
- la présente invention permet d'obtenir au moins le même niveau de performance en termes de résistance à la corrosion et de susceptibilité au percement après un test SWAAT que l'alliage de référence.

### Exemple 2

Différents lingots d'âme ont été coulés en coulée semi-continue verticale (DC casting) avec des alliages d'aluminium ayant les compositions données dans le Tableau 4 ci-après, en pourcentages massiques :

**[Tableau 4]**

| **Alliages** | **Si** | **Fe** | **Cu** | **Mn** | **Ti** | **T solidus (°C)** |
|---|---|---|---|---|---|---|
| Ame-Comparatif-3 | 0.2 | 0.13 | 0.64 | 1.33 | 0.08 | 638 |
| Ame-Comparatif-4 | 0.19 | 0.12 | 0.62 | 1.28 | 0.08 | 638 |
| Ame-Comparatif-5 | 0.18 | 0.12 | 0.93 | 1.52 | 0.08 | 634 |
| Ame-Innov-3 | 0.45 | 0.15 | 0.93 | 1.52 | 0.08 | 632 |

Les lingots d'âme ont été homogénéisés à une température de 550 à 630°C pendant 1 à 24 heures.

Les lingots d'âme ont ensuite été assemblés avec un placage de brasage en alliage de type AA4045 d'un côté, qui représentait 5 % de l'épaisseur totale de l'assemblage, et avec une anode sacrificielle en alliage de type AA7072 de l'autre côté, qui représentait 10 % de l'épaisseur totale de l'assemblage. Les compositions des alliages de brasage et des anodes sacrificielles sont données dans le Tableau 5 ci-après, en pourcentages massiques.

**[Tableau 5]**

| **Alliages** | **Si** | **Fe** | **Cu** | **Mn** | **Ti** | **Zn** |
|---|---|---|---|---|---|---|
| Brasage-1 | 9.83 | 0.13 | 0.01 | 0.01 | 0.02 | 0.003 |
| Brasage-2 | 9.73 | 0.19 | 0.01 | 0.02 | 0.03 | 0.003 |
| Brasage-3 | 9.73 | 0.19 | 0.01 | 0.02 | 0.03 | 0.003 |
| Brasage-4 | 9.73 | 0.19 | 0.01 | 0.02 | 0.03 | 0.003 |
| | | | | | | |
| Anode-1 | 0.14 | 0.32 | 0.001 | 0.003 | 0.03 | 0.97 |
| Anode-2 | 0.15 | 0.33 | 0.001 | 0.003 | 0.03 | 0.98 |
| Anode-3 | 0.15 | 0.33 | 0.001 | 0.003 | 0.03 | 0.98 |
| Anode-4 | 0.15 | 0.33 | 0.001 | 0.003 | 0.03 | 0.98 |

L'alliage de brasage et l'anode sacrificielle n°1 ont été plaqués sur l'âme Ame-Comparatif-3 (Assemblage-1). L'alliage de brasage et l'anode sacrificielle n°2 ont été plaqués sur l'âme Ame-Comparatif-4 (Assemblage-2). L'alliage de brasage et l'anode sacrificielle n°3 ont été plaqués sur l'âme Ame-Comparatif-5 (Assemblage-3). L'alliage de brasage et l'anode sacrificielle n°4 ont été plaqués sur l'âme Ame-Innov-3 (Assemblage-4).

Les assemblages ont été préchauffés à une température de 450 à 550°C, avec un maintien à la température maximale pendant moins de 30 heures, laminés à chaud à une température d'environ 500°C jusqu'à une épaisseur de 3 mm, puis laminés à froid jusqu'à une épaisseur finale totale pour le sandwich de 1 mm. Un recuit final pendant 30 minutes à 340°C a permis d'obtenir un état métallurgique O.

Des simulations de brasage ont ensuite été réalisées sur des échantillons de 21 cm x 30 cm pour reproduire les conditions d'un brasage sous atmosphère contrôlée (CAB) ayant moins de 50 ppm d'O₂, avec un chauffage à 600°C pendant 2 minutes.

Des mesures de résistance en traction UTS (=Rm), de limite d'élasticité TYS (=Rp_{0,2}) et d'élongation E% (=A%) ont été réalisées sur les échantillons avant et après brasage. Des mesures de résistance à la corrosion selon le test SWAAT sur la face plaquée avec l'alliage de brasage AA4045 ont été réalisées sur les échantillons brasés.

Les mesures de résistance en traction UTS (=Rm), de limite d'élasticité TYS (=Rp_{0,2}) et d'élongation E% (=A%) ont été réalisées selon la norme ISO 6892-1.

Les résultats des mesures de performances mécaniques avant et après brasage sont données dans le Tableau 6 ci-après.

**[Tableau 6]**

| **Assemblage** | **Avant brasage** | | | **Après brasage** | | |
|---|---|---|---|---|---|---|
| | **TYS** | **UTS** | **E%** | **TYS** | **UTS** | **E%** |
| **1** | 53 | 135 | 26,7 | 47 | 136 | 28,2 |
| **2** | 50 | 135 | 28,6 | 46 | 135 | 27,3 |
| **3** | 57 | 150 | 30,4 | 52 | 152 | 24,7 |
| **4** | 53 | 145 | 25,5 | 51 | 150 | 25,4 |

La tenue en corrosion a été déterminée en utilisant le protocole suivant :
- préparer pour chaque configuration un échantillon de dimensions 126 mm (sens L) x 90 mm (sens TL), préalablement dégraissé avec un papier absorbant blanc imbibé d'acétone ;
- protéger la face non-testée ainsi que les quatre bords sur une largeur d'environ 0,5 cm avec un adhésif vinyle transparent (par exemple de type 3M vinyl 764) ;
- nettoyer la face à tester avec un papier absorbant imbibé d'acétone ;
- placer les échantillons ainsi préparés sur un rack avec une inclinaison d'environ 60° par rapport à l'horizontale ;
- réaliser pour chaque échantillon un test cyclique SWAAT (Sea Water Acidified Acetic Test) selon la norme ASTM G85 A3, comprenant notamment une alternance de phases de brouillard salin de 30 min et de phases humides de 1h30 à une température de 49°C.

En parallèle, le nombre de percements a été relevé chaque jour pour chaque échantillon pendant toute la durée du test SWAAT, soit 29 jours, 41 jours, 58 jours et 63 jours. Les percements étaient visibles au dos de chaque échantillon car ils formaient des cloques dans l'adhésif appliqué sur la face non testée, comme illustré sur la Figure 1.

Les résultats du suivi du nombre de percements sont donnés dans le Tableau 7 ci-après.

**[Tableau 7]**

| | **Nombre de percements après test SWAAT** | | | |
|---|---|---|---|---|
| **Assemblage** | **29 jours** | **41 jours** | **58 jours** | **63 jours** |
| **1** | 6 | 4 | 27 | 131 |
| **2** | 0 | 1 | 6 | 55 |
| **3** | 0 | 16 | 48 | 113 |
| **4** | 0 | 0 | 0 | 0 |

D'après les Tableaux 6 et 7 ci-avant, il est possible de tirer la conclusion que la présente invention permet d'obtenir le meilleur compromis entre des résistances mécaniques satisfaisantes, en particulier Rm (=UTS) supérieur à 140 MPa, et une résistance à la corrosion améliorée, par exemple une absence de percements dus à la corrosion pendant une période plus longue.

## Revendications

1. Bande ou tôle, destinée à la fabrication d'échangeurs thermiques brasés, ayant une couche d'âme, éventuellement une couche de couverture sur une ou deux faces de la couche d'âme et éventuellement une couche intercalaire sur une ou deux faces de la couche d'âme placée entre la couche d'âme et l'éventuelle couche de couverture, la couche d'âme étant en alliage d'aluminium de composition (% en masse) :
- Si : plus de 0,25 %, de préférence plus de 0,30 %, de préférence plus de 0,35 %, de préférence plus de 0,40 % ; et moins de 0,60 %, de préférence moins de 0,55 % ;
- Fe : moins de 0,25 %, de préférence moins de 0,20 % ; et au moins 0,08 %, de préférence plus de 0,10 % ;
- Cu : plus de 0,60 %, de préférence plus de 0,70 %, de préférence plus de 0,80 %, de préférence plus de 0,85 % ; et moins de 1,10 %, de préférence moins de 1,00 %, de préférence inférieure à 0,95 % ;
- Mn : plus de 1,40 %, de préférence plus de 1,50 % ; et moins de 2,00 %, de préférence moins 1,80 %, de préférence moins de 1,65 % ;
- Ti : moins de 0,10 % ; et plus de 0,05 % ;
- Mg : moins de 0,05 %, de préférence moins de 0,02 %, de préférence moins de 0,01 %, de préférence moins de 0,001 % ;
- Zr : moins de 0,01 %, de préférence moins de 0,005 % ;
- Cr : moins de 0,01 %, de préférence moins de 0,005 % ;
- Zn : moins de 0,20 %, de préférence moins de 0,10 %, de préférence moins de 0,05 %, de préférence moins de 0,01 % ;
- impuretés : moins de 0,05 % chacune et moins de 0,15 % au total ;
- reste aluminium.

2. Bande ou tôle selon la revendication 1, **caractérisée en ce qu'**elle est plaquée, sur une ou deux faces de la couche d'âme et/ou sur une face libre de l'éventuelle couche intercalaire, avec un alliage de couverture qui est un alliage d'aluminium de brasage, de préférence un alliage de la série 4xxx comprenant de 4,00 à 13,00 % en masse de Si, moins de 1,00 % en masse de Fe, et de préférence moins de 0,20 %, de préférence moins de 0,10 %, de préférence moins de 0,05 %, de préférence moins de 0,02 % de Zn.

3. Bande ou tôle selon la revendication 2, **caractérisée en ce que** l'alliage d'aluminium de brasage de la série 4xxx comprend (% en masse) :
- Si : de 5,00 à 13,00 %, de préférence de 6,00 à 11,00 %, de préférence de 7,50 à 10,50 ;
- Fe : moins de 0,60 %, de préférence moins de 0,50 %, de préférence moins de 0,30 % ;
- Cu : moins de 0,40 %, de préférence moins de 0,10 %, de préférence moins de 0,05 % ;
- Mn : moins de 0,20 %, de préférence moins de 0,10 %, de préférence moins de 0,05 % ;
- Mg : selon une première variante moins de 0,20 %, de préférence moins de 0,10 %, de préférence moins de 0,05 % ; ou selon une deuxième variante de 0,50 à 2,50 %, de préférence de 1,00 à 2,00 % ;
- Zn : moins de 0,20 %, de préférence moins de 0,10 %, de préférence moins de 0,05 %, de préférence moins de 0,02 % ;
- Ti : moins de 0,30 %, de préférence moins de 0,10 %, de préférence moins de 0,05 %;
- éventuellement Bi, Y, Sr et/ou Sn avec Bi : au plus 0,04 %, de préférence au plus 0,03 %, de préférence au plus 0,02 % ;Y : de 0,01 à 0,10 %, de préférence de 0,015 à 0,08 %, de préférence de 0,02 à 0,065 % ;Sn : de 0,01 à 0,10 %, de préférence de 0,015 à 0,08 %, de préférence de 0,02 à 0,065 %;
- autres éléments : inférieurs à 0,05 % chacun et inférieurs à 0,15 % au total ;
- reste aluminium.

4. Bande ou tôle selon la revendication 1, **caractérisée en ce qu'**elle est plaquée, sur une ou deux faces de la couche d'âme, avec un alliage de couverture de type anode sacrificielle, qui est un alliage de la série 7xxx, ayant de préférence la composition suivante, en pourcentages massiques :
- moins de 0,50 % de Si ;
- moins de 0,50 % de Fe ;
- moins de 0,25 % de Cu ;
- moins de 0,30 % de Mn ;
- moins de 0,20 %, de préférence moins de 0,15 % de Mg ;
- de 0,70 à 5,00 %, de préférence de 0,70 à moins de 2,50 %, de préférence de 0,70 à moins de 1,30 %, de préférence de 0,70 à moins de 1,00 % de Zn ;
- moins de 0,15 % de Ti ;
- autres éléments moins de 0,05 % chacun et moins de 0,15 % au total ;
- reste aluminium.

5. Bande ou tôle selon la revendication 1, **caractérisée en ce qu'**elle est plaquée, sur une ou deux faces de la couche d'âme, avec un alliage de couverture de type anode sacrificielle, qui est un alliage de la série 3xxx, ayant de préférence la composition suivante, en pourcentages massiques :
- de 0,10 à 0,35 % de Si ;
- moins de 0,70 % de Fe ;
- moins de 0,20 % de Cu ;
- de 0,70 à 2,00 %, de préférence de 0,90 à 1,30 % de Mn ;
- de 0,50 à 1,60 %, de préférence de 0,90 à 1,20 % de Zn ;
- moins de 0,15 % de Ti ;
- autres éléments moins de 0,05 % chacun et moins de 0,15 % total ;
- reste aluminium.

6. Bande ou tôle selon la revendication 2 ou 3, **caractérisée en ce qu'**elle plaquée, sur une ou deux faces de la couche d'âme, avec un alliage d'aluminium dit intercalaire, de préférence de la série 1xxx ou 3xxx, placé entre l'âme et l'alliage de brasage, de préférence comprenant (en pourcentages massiques) :
- Si : moins de 0,50 %, plus préférentiellement moins de 0,20 % ;
- Fe : moins de 0,70 %, plus préférentiellement moins de 0,30 %, encore plus préférentiellement moins de 0,20 % ;
- Mn : de 0,30 à 1,40 %, plus préférentiellement de 0,50 à 0,90 %, plus préférentiellement de 0,60 à 0,80 % ; ou selon une variante de 1,00 à 1,30 % ;
- Cu : moins de 0,30 %, de préférence moins de 0,10 %, encore plus préférentiellement moins de 0,05 % ;
- éventuellement Mg, Zn et/ou In ;
- autres éléments < 0,05 % chacun et < 0,15 % au total ;
- reste aluminium.

7. Bande ou tôle selon la revendication 6, **caractérisée en ce que** l'alliage d'aluminium intercalaire comprend (% en masse) :
- Si < 0,15 % ;
- Fe < 0,20 % ;
- Cu < 0,10 % ;
- Mn de 0,60 à 0,80 % ;
- Mg < 0,02 % selon une première variante ou Mg < 0,50 %, de préférence < 0,25 % selon une deuxième variante ;
- autres éléments < 0,05 % chacun et < 0,15 % au total,
- reste aluminium.

8. Procédé de fabrication d'une bande ou tôle selon l'une quelconque des revendications précédentes, comprenant les étapes successives de :
- coulée d'une plaque en alliage d'âme ;
- éventuellement homogénéisation de la plaque de 550 à 630°C, de préférence de 580 à 630°C pendant 1 à 24 heures ;
- placage éventuel avec un alliage d'aluminium de couverture sur une ou deux faces de la couche d'âme et éventuellement un alliage d'aluminium intercalaire sur une ou deux faces de la couche d'âme ;
- préchauffage à une température de 450 à 550°C, de préférence avec un maintien à la température maximale pendant moins de 30 heures, de préférence pendant moins de 20 heures, de préférence pendant moins de 12 heures, plus préférentiellement pendant moins de 3 heures ;
- laminage à chaud de la plaque éventuellement homogénéisée et éventuellement plaquée à une température de 420 à 530°C jusqu'à une épaisseur de 2 à 6 mm,
- laminage à froid à l'épaisseur désirée, l'épaisseur de la bande ou tôle après laminage à froid étant de préférence de 0,15 à 3 mm et
- recuit à une température de 240 à 450°C, de préférence de 240 à 400°C, de préférence de 280 à 370°C, avec un maintien à la température maximale pendant 10 minutes à 15 heures, de préférence pendant 20 minutes à 3 heures.

9. Echangeur de chaleur réalisé au moins en partie à partir d'une bande ou tôle selon l'une quelconque des revendications 1 à 7.

10. Utilisation d'une bande ou tôle selon l'une quelconque des revendications 1 à 7, pour la fabrication d'un échangeur de chaleur.

## Patentansprüche

1. Band oder Blech, das zur Herstellung von gelöteten Wärmetauschern bestimmt ist, das eine Kernschicht, eventuell eine Deckschicht auf einer oder zwei Seiten der Kernschicht und eventuell eine Zwischenschicht auf einer oder zwei Seiten der Kernschicht aufweist, die zwischen der Kernschicht und der eventuellen Deckschicht platziert ist, wobei die Kernschicht aus Aluminiumlegierung mit folgender Zusammensetzung (Masse-%) besteht:
- Si: mehr als 0,25 %, bevorzugt mehr als 0,30 %, bevorzugt mehr als 0,35 %, bevorzugt mehr als 0,40 %; und weniger als 0,60 %, bevorzugt weniger als 0,55 %;
- Fe: weniger als 0,25 %, bevorzugt weniger als 0,20 %; und mindestens 0,08 %, bevorzugt mehr als 0,10 %;
- Cu: mehr als 0,60 %, bevorzugt mehr als 0,70 %, bevorzugt mehr als 0,80 %, bevorzugt mehr als 0,85 %; und weniger als 1,10 %, bevorzugt weniger als 1,00 %, bevorzugt weniger als 0,95 %;
- Mn: mehr als 1,40 %, bevorzugt mehr als 1,50 %; und weniger als 2,00 %, bevorzugt weniger als 1,80 %, bevorzugt weniger als 1,65 %;
- Ti: weniger als 0,10 %; und mehr als 0,05 %;
- Mg: weniger als 0,05 %, bevorzugt weniger als 0,02 %, bevorzugt weniger als 0,01 %, bevorzugt weniger als 0,001 %;
- Zr: weniger als 0,01 %, bevorzugt weniger als 0,005 %;
- Cr: weniger als 0,01 %, bevorzugt weniger als 0,005 %;
- Zn: weniger als 0,20 %, bevorzugt weniger als 0,10 %, bevorzugt weniger als 0,05 %, bevorzugt weniger als 0,01 %;
- Verunreinigungen: jeweils weniger als 0,05 % und insgesamt weniger als 0,15 %;
- der Rest Aluminium.

2. Band oder Blech nach Anspruch 1, **dadurch gekennzeichnet, dass** es auf einer oder zwei Seiten der Kernschicht und/oder auf einer freien Seite der eventuellen Zwischenschicht mit einer Decklegierung plattiert ist, bei der es sich um eine Aluminium-Lotlegierung handelt, bevorzugt eine Legierung der Reihe 4xxx, die 4,00 bis 13,00 Massen-% Si, weniger als 1,00 Massen-% Fe und bevorzugt weniger als 0,20 %, bevorzugt weniger als 0,10 %, bevorzugt weniger als 0,05 %, bevorzugt weniger als 0,02 % Zn umfasst.

3. Band oder Blech nach Anspruch 2, **dadurch gekennzeichnet, dass** die Aluminium-Lotlegierung der Reihe 4xxx umfasst (Masse-%):
- Si: 5,00 bis 13,00 %, bevorzugt 6,00 bis 11,00 %, bevorzugt 7,50 bis 10,50;
- Fe: weniger als 0,60 %, bevorzugt weniger als 0,50 %, bevorzugt weniger als 0,30 %;
- Cu: weniger als 0,40 %, bevorzugt weniger als 0,10 %, bevorzugt weniger als 0,05 %;
- Mn: weniger als 0,20 %, bevorzugt weniger als 0,10 %, bevorzugt weniger als 0,05 %;
- Mg: gemäß einer ersten Variante weniger als 0,20 %, bevorzugt weniger als 0,10 %, bevorzugt weniger als 0,05 %; oder gemäß einer zweiten Variante 0,50 bis 2,50 %, bevorzugt 1,00 bis 2,00 %;
- Zn: weniger als 0,20 %, bevorzugt weniger als 0,10 %, bevorzugt weniger als 0,05 %, bevorzugt weniger als 0,02 %;
- Ti: weniger als 0,30 %, bevorzugt weniger als 0,10 %, bevorzugt weniger als 0,05 %;
- eventuell Bi, Y, Sr und/oder Sn mit Bi: höchstens 0,04 %, bevorzugt höchstens 0,03 %, besonders bevorzugt höchstens 0,02 %; Y: von 0,01 % bis 0,10 %, bevorzugt von 0,015 % bis 0,08 %, besonders bevorzugt von 0,02 % bis 0,065 %; Sn: von 0,01 % bis 0,10 %, bevorzugt von 0,015 % bis 0,08 %, besonders bevorzugt von 0,02 % bis 0,065 %;
- sonstige Elemente: jeweils weniger als 0,05 % und insgesamt weniger als 0,15 %;
- der Rest Aluminium.

4. Band oder Blech nach Anspruch 1, **dadurch gekennzeichnet, dass** es auf einer oder zwei Seiten der Kernschicht mit einer Decklegierung vom Typ Opferanode plattiert ist, bei der es sich um eine Legierung der Reihe 7xxx handelt, die bevorzugt die folgende Zusammensetzung, in Massenprozent, aufweist:
- weniger als 0,50 % Si;
- weniger als 0,50 % Fe;
- weniger als 0,25 % Cu;
- weniger als 0,30 % Mn;
- weniger als 0,20 %, bevorzugt weniger als 0,15 % Mg;
- 0,70 bis 5,00 %, bevorzugt 0,70 bis weniger als 2,50 %, bevorzugt 0,70 bis weniger als 1,30 %, bevorzugt 0,70 bis weniger als 1,00 % Zn;
- weniger als 0,15 % Ti;
- sonstige Elemente jeweils weniger als 0,05 % und insgesamt weniger als 0,15 %;
- der Rest Aluminium.

5. Band oder Blech nach Anspruch 1, **dadurch gekennzeichnet, dass** es auf einer oder zwei Seiten der Kernschicht mit einer Decklegierung vom Typ Opferanode plattiert ist, bei der es sich um eine Legierung der Reihe 3xxx handelt, die bevorzugt die folgende Zusammensetzung, in Massenprozent, aufweist:
- 0,10 bis 0,35 % Si;
- weniger als 0,70 % Fe;
- weniger als 0,20 % Cu;
- 0,70 bis 2,00 %, bevorzugt 0,90 bis 1,30 % Mn;
- 0,50 bis 1,60 %, bevorzugt 0,90 bis 1,20 % Zn;
- weniger als 0,15 % Ti;
- sonstige Elemente jeweils weniger als 0,05 % und insgesamt weniger als 0,15 %;
- der Rest Aluminium.

6. Band oder Blech nach Anspruch 2 oder 3, **dadurch gekennzeichnet, dass** es auf einer oder zwei Seiten der Kernschicht mit einer sogenannten Zwischen-Aluminiumlegierung, bevorzugt aus der Reihe 1xxx oder 3xxx, plattiert ist, die zwischen dem Kern und der Lotlegierung platziert ist, bevorzugt umfassend (in Massenprozent):
- Si: weniger als 0,50 %, bevorzugter weniger als 0,20 %;
- Fe: weniger als 0,70 %, bevorzugter weniger als 0,30 %, noch bevorzugter weniger als 0,20 %;
- Mn: 0,30 bis 1,40 %, bevorzugter 0,50 bis 0,90 %, noch bevorzugter 0,60 bis 0,80 %; oder gemäß einer Variante 1,00 bis 1,30 %;
- Cu: weniger als 0,30 %, bevorzugt weniger als 0,10 %, noch bevorzugter weniger als 0,05 %;
- eventuell Mg, Zn und/oder In;
- sonstige Elemente jeweils < 0,05 % und insgesamt < 0,15 %;
- der Rest Aluminium.

7. Band oder Blech nach Anspruch 6, **dadurch gekennzeichnet, dass** die Zwischen-Aluminiumlegierung umfasst (Masse-%):
- Si < 0,15 %;
- Fe < 0,20 %;
- Cu < 0,10 %;
- Mn 0,60 bis 0,80 %;
- Mg < 0,02 % gemäß einer ersten Variante oder Mg < 0,50 %, bevorzugt < 0,25 % gemäß einer zweiten Variante;
- sonstige Elemente jeweils < 0,05 % und insgesamt < 0,15 %,
- der Rest Aluminium.

8. Verfahren zur Herstellung eines Bandes oder Blechs nach einem der vorstehenden Ansprüche, das die folgenden aufeinanderfolgenden Schritte umfasst:
- Gießen einer Platte aus Kernlegierung;
- eventuell Homogenisieren der Platte bei 550 bis 630 °C, bevorzugt 580 bis 630 °C für 1 bis 24 Stunden;
- eventuell Plattieren mit einer Deck-Aluminiumlegierung auf einer oder zwei Seiten der Kernschicht und eventuell einer Zwischen-Aluminiumlegierung auf einer oder zwei Seiten der Kernschicht;
- Vorwärmen auf eine Temperatur von 450 bis 550 °C, bevorzugt mit einem Halten auf der maximalen Temperatur für weniger als 30 Stunden, bevorzugt für weniger als 20 Stunden, bevorzugt für weniger als 12 Stunden, noch bevorzugter für weniger als 3 Stunden;
- Warmwalzen der eventuell homogenisierten und eventuell plattierten Platte bei einer Temperatur von 420 bis 530 °C auf eine Dicke von 2 bis 6 mm,
- Kaltwalzen auf die gewünschte Dicke, wobei die Dicke des Bandes oder Blechs nach dem Kaltwalzen bevorzugt 0,15 bis 3 mm beträgt, und
- Glühen bei einer Temperatur von 240 bis 450 °C, bevorzugt 240 bis 400 °C, bevorzugt 280 bis 370 °C, mit einem Halten auf der maximalen Temperatur für 10 Minuten bis 15 Stunden, bevorzugt für 20 Minuten bis 3 Stunden.

9. Wärmetauscher, der mindestens zum Teil aus einem Band oder Blech nach einem der Ansprüche 1 bis 7 hergestellt ist.

10. Verwendung eines Bandes oder Blechs nach einem der Ansprüche 1 bis 7 zur Herstellung eines Wärmetauschers.

## Claims

1. A strip or sheet, intended for the manufacture of brazed heat exchangers, having a core layer, optionally a covering layer on one or two face(s) of the core layer and optionally an interlayer on one or two face(s) of the core layer placed between the core layer and the optional covering layer, the core layer being made of an aluminum alloy with the following composition (% by weight):
- Si: more than 0.25%, preferably more than 0.30%, preferably more than 0.35%, preferably more than 0.40%; and less than 0.60%, preferably less than 0.55%;
- Fe: less than 0.25%, preferably less than 0.20%; and at least 0.08%, preferably more than 0.10%;
preferably more than 0.85%; and less than 1.10%, preferably less than 1.00%, preferably less than 0.95%;
- Mn: more than 1.40%, preferably more than 1.50%; and less than 2.00%, preferably less than 1.80%, preferably less than 1.65%;
- Ti: less than 0.10%; and more than 0.05%;
- Mg: less than 0.05%, preferably less than 0.02%, preferably less than 0.01%, preferably less than 0.001%;
- Zr: less than 0.01%, preferably less than 0.005%;
- Cr: less than 0.01%, preferably less than 0.005%;
- Zn: less than 0.20%, preferably less than 0.10%, preferably less than 0.05%, preferably less than 0.01%;
- impurities: less than 0.05% each and less than 0.15% in total;
- remainder aluminum.

2. The strip or sheet according to claim 1, **characterized in that** it is plated, over one or two face(s) of the core layer and/or over a free face of the optional interlayer, with a covering alloy which is a brazing aluminum alloy, preferably a 4xxx series alloy comprising from 4.00 to 13.00% by weight of Si, less than 1.00% by weight of Fe, and preferably less than 0.20%, preferably less than 0.10%, preferably less than 0.05%, preferably less than 0.02% Zn.

3. The strip or sheet according to claim 2, **characterized in that** the 4xxx series brazing aluminum alloy comprises (% by weight):
- Si: from 5.00 to 13.00%, preferably from 6.00 to 11.00%, preferably from 7.50 to 10.50;
- Fe: less than 0.60%, preferably less than 0.50%, preferably less than 0.30%;
- Cu: less than 0.40%, preferably less than 0.10%, preferably less than 0.05%;
- Mn: less than 0.20%, preferably less than 0.10%, preferably less than 0.05%;
- Mg: according to a first variant less than 0.20%, preferably less than 0.10%, preferably less than 0.05%; or according to a second variant from 0.50 to 2.50%, preferably from 1.00 to 2.00%;
- Zn: less than 0.20%, preferably less than 0.10%, preferably less than 0.05%, preferably less than 0.02%;
- Ti: less than 0.30%, preferably less than 0.10%, preferably less than 0.05%;
- optionally Bi, Y, Sr and/or Sn with Bi: at most 0.04%, preferably at most 0.03%, more preferably at most 0.02%; Y: from 0.01% to 0.10%, preferably from 0.015% to 0.08%, more preferably from 0.02% to 0.065%; Sn: from 0.01% to 0.10%, preferably from 0.015% to 0.08%, more preferably from 0.02% to 0.065%;
- other elements: less than 0.05% each and less than 0.15% in total;
- remainder aluminum.

4. The strip or sheet according to claim 1, **characterized in that** it is plated, over one or two face(s) of the core layer, with a covering alloy of the sacrificial anode type, which is a 7xxx series alloy, preferably having the following composition, in weight percentages:
- less than 0.50% Si;
- less than 0.50% Fe;
- less than 0.25% Cu;
- less than 0.30% Mn;
- less than 0.20%, preferably less than 0.15% Mg;
- from 0.70 to 5.00%, preferably from 0.70 to less than 2.50%, preferably from 0.70 to less than 1.30%, preferably from 0.70 to less than 1.00% Zn;
- less than 0.15% Ti;
- other elements less than 0.05% each and less than 0.15% in total;
- remainder aluminum.

5. The strip or sheet according to claim 1, **characterized in that** it is plated, over one or two face(s) of the core layer, with a covering alloy of the sacrificial anode type, which is a 3xxx series alloy, preferably having the following composition, in weight percentages:
- from 0.10 to 0.35% Si;
- less than 0.70% Fe;
- less than 0.20% Cu;
- from 0.70 to 2.00%, preferably from 0.90 to 1.30% Mn;
- from 0.50 to 1.60%, preferably from 0.90 to 1.20% Zn;
- less than 0.15% Ti;
- other elements less than 0.05% each and less than 0.15% in total;
- remainder aluminum.

6. The strip or sheet according to claim 2 or 3, **characterized in that** it is plated, over one or two face(s) of the core layer, with a so-called interlayer aluminum alloy, preferably of the 1xxx or 3xxx series, placed between the core and the brazing alloy, preferably comprising (in weight percentages):
- Si: less than 0.50%, more preferably less than 0.20%;
- Fe: less than 0.70%, more preferably less than 0.30%, even more preferably less than 0.20%;
- Mn: from 0.30 to 1.40%, more preferably from 0.50 to 0.90%, more preferably from 0.60 to 0.80%; or according to one variant from 1.00 to 1.30%;
- Cu: less than 0.30%, preferably less than 0.10%, even more preferably less than 0.05%;
- optionally Mg, Zn and/or In;
- other elements < 0.05% each and < 0.15% in total;
- remainder aluminum.

7. The strip or sheet according to claim 6, **characterized in that** the interlayer aluminum alloy comprises (% by weight):
- Si < 0.15%;
- Fe < 0.20%;
- Cu < 0.10%;
- Mn from 0.60 to 0.80%;
- Mg < 0.02% according to a first variant or Mg < 0.50%, preferably < 0.25% according to a second variant;
- other elements < 0.05% each and < 0.15% in total,
- remainder aluminum.

8. A method for manufacturing a strip or sheet according to any one of the preceding claims, comprising the successive steps of:
- casting a plate made of a core alloy;
- optionally homogenizing the plate at 550 to 630°C, preferably at 580 to 630°C for 1 to 24 hours;
core layer and optionally an interlayer aluminum alloy over one or two face(s) of the core layer;
the maximum temperature for less than 30 hours, preferably for less than 20 hours, preferably for less than 12 hours, more preferably for less than 3 hours;
- hot rolling the optionally homogenized and optionally plated plate at a temperature from 420 to 530°C up to a thickness of 2 to 6 mm,
- cold rolling to the desired thickness, the thickness of the strip or sheet after cold rolling preferably being 0.15 to 3 mm, and
- annealing at a temperature from 240 to 450°C, preferably from 240 to 400°C, preferably from 280 to 370°C, with maintenance at the maximum temperature for 10 minutes to 15 hours, preferably for 20 minutes to 3 hours.

9. A heat exchanger made at least partially from a strip or sheet according to any one of claims 1 to 7.

10. A use of a strip or sheet according to any one of claims 1 to 7, for the manufacture of a heat exchanger.
